# EUROPÄISCHE PATENTANMELDUNG

(11) **EP 0 584 705 A1**
(43) Veröffentlichungstag der Anmeldung: **02.03.1994**
(21) Anmeldenummer: 93113200.5
(22) Anmeldetag: 18.08.1993
(51) Int. Cl.: H01M 10/54, H01M 6/52

(54) **Verfahren zur Entsorgung von Hochtemperaturspeicherbatterien**

(30) Priorität: 21.08.1992 DE 4227684
(71) Anmelder: ABB PATENT GmbH, D-68309 Mannheim (DE)
(72) Erfinder: Bauer, Roland, Dr., D-69514 Laudenbach (DE)
(74) Vertreter: Rupprecht, Klaus, Dipl.-Ing.

(57) **Zusammenfassung**

Die Erfindung bezieht sich auf ein Verfahren zur Entsorgung von Hochtemperaturspeicherbatterien (1), die aus wieder aufladbaren Speicherzellen auf der Basis von Natrium und Schwefel aufgebaut sind. Erfindungsgemäß wird jeder Hochtemperaturspeicherbatterie schrittweise zerlegt. Die dabei freiwerdenden Materialien werden entweder zur Herstellung neuer Hochtemeperaturspeicherbatterien (1) verwendet oder einer Materialwiedergewinnung zugeführt.

## Beschreibung

Die Erfindung bezieht sich auf ein Verfahren zur Entsorgung von Hochtemepraturspeicherbatterien gemäß dem Oberbegriff des Patentanspruches 1.

Ein solches Verfahren kommt dort zur Anwendung, wo Hochtemperaturspeicherbatterien, die aus Speicherzellen auf der Basis von Natrium und Schwefel aufgebaut sind, entsorgt werden müssen. Die Entsorgung solcher Batterien in Obertagedeponien ist nicht möglich, da durch Korrosion der Batterien und Zellgehäuse oder bei sonstigen mechanischen Einwirkungen die Gefahr der Selbstentzündung bzw. Kontamination des Sickerwassers und damit eine Verseuchung des Grundwassers besteht.

Der Erfindung liegt die Aufgabe zugrunde, ein verfahren aufzuzeigen, mit dem Hochtemperaturspeicherbatterien, die aus wiederaufladbaren Speicherzellen der obengenannten Art aufgebaut sind, kostengünstig entsorgt werden können. Diese Aufgabe wird erfindungsgemäß durch die Merkmale des Patentanspruches 1 gelöst.

Das Verfahren beruht darauf, die Einzelkomponenten solcher Hochtemperaturspeicherbatterien voneinander zu trennen, so daß eine direkte Wiederverwendung oder eine indirekte Weiterverwertung möglich ist. Zunächst werden bei jeder zu entsorgenden Hochtemperaturspeicherbatterie die peripheren Anschlußelemente, elektrischen Anschlußkabel, Kontrolleitungen und Vakuumstopfen entfernt. Diese Bauelemente werden je nach Zustand entweder einer direkten Wiederverwendung oder der Wiedergewinnung von Materialien zugeführt. Anschließend wird das Außengehäuse und die Wärmedämmung der Hochtemperaturspeicherbatterie entfernt. Das Außengehäuse wird durch gezieltes Öffnen der boden- und/oder deckelseitigen Schweißnähte abgetrennt. Falls die abgetrennten Bauteile nicht wieder verwendbar sind, werden sie der Wiedergewinnung von Material zugeführt. Die Wärmedämmstoffe werden entweder beim Hersteller aufbereitet oder falls sie sich in einem guten Zustand befinden, wiederverwendet. Anschließend wird das Innengehäuse der Hochtemperaturspeicherbatterie beseitigt. Hierfür wird zunächst der Deckel des Innengehäuses entfernt und für die Herstellung einer neuen Batterie verwendet. Die jetzt sichtbaren Speicherzellen werden aufgestochen, so daß die Kartuschen der Zellen zugänglich sind. Das in den Kartuschen enthaltene Natrium wird in einem direkt angekoppelten Schutzgasofen aufgeschmolzen und aus den Zellen entfernt. Es kann für das Füllen neuer Speicherzellen verwendet werden. Im Anschluß daran wird das Innengehäuse der Hochtemperaturbatterie abgetrennt. Die dabei freigelegten Heiz- und Kühlvorrichtungen sind, soweit sie sich in gutem Zustand befinden, einer Wiederverwendung zuführbar. Ansonsten werden sie der Materialwiedergewinnung zugeführt. Zur Halterung sind die Speicherzellen von einer Vergußmasse umgeben. Durch mechanische Einwirkung wird das Vergußmaterial größtenteils entfernt. Es kann aufbereitet und für die Herstellung neuer Hochtemperaturspeicherbatterien verwendet werden. Die zurückbleibende natriumfreie Zellmatrix wird nachfolgend zerkleinert. Aus dem Shreddergut werden die Aluminiumteile abgesondert und dem Umschmelzrecyling zugeführt. Der zurückbleibende Batterieschrott enthält kathodenseitiges Natriumpolysulfid. Diseses ist zum Teil vermengt mit elementarem Schwefel. Diese Stoffe sind extrahierbar und können einer Weiterverarbeitung zugeführt werden. Das Shreddergut kann auch thermisch durch Abrösten so weiterverarbeitet werden, daß anschließend Schwefelsäure und schadstoffreie Abfallstoffe zur Endlagerung oder zur Weiterverarbeitung daraus gewonnen werden können. Andererseits besteht die Möglichkeit, das Shreddergut mittels Wasser auszulaugen und das deponiefähige Keramikmaterial abzufiltern.

Das erfindungsgemäße Verfahren wird anhand einer Zeichnung näher erläutert.

Die einzige zur Beschreibung gehörende Zeichnung zeigt eine zu entsorgende Hochtemperaturspeicherbatterie 1. Diese wird nach außen hin von einem doppelwandigen Gehäuse 2 begrenzt. Zwischen dem Außengehäuse 2A und dem Innengehäuse 2I ist Isoliermaterial 2R angeordnet, das zur Wärmedämmung dient. Der Verschluß der Batterie erfolgt durch einen Deckel oder durch einen Wärmestopfen 2D. Im Inneren des Batteriegehäuses 2 sind wiederaufladbare Speicherzellen 4 angeordnet, die in eine Vergußmasse 5 eingebettet sind. Bei den wiederaufladbaren Speicherzellen 4 handelt es sich um solche, auf der Basis von Natrium und Schwefel. Jede Speicherzelle 4 wird durch ein becherförmiges Gehäuse 4G aus Metall nach außen begrenzt.

Im Inneren ist ein ebenfalls becherförmiger Festelektrolyt (hier nicht dargestellt) angeordnet. In den Festelektrolyten ist eine das Natrium enthaltende Kartusche (hier nicht dargestellt) eingesetzt, während zwischen dem Festelektrolyten und dem metallischen Gehäuse 4G der Speicherzelle 4 die Schwefelelektrode angeordnet ist (hier nicht dargestellt). Die im Inneren der Batterie 1 angeordneten Speicherzellen 4 sind über elektrische Leitungen 6 und 7 mit dem Außenbereich der Batterie 1 verbunden. Über Leitungen 10 wird das Innere der Batterie 1 mit Kühlmitteln (hier nicht dargestellt) ver- und entsorgt. Um die nicht mehr im Betrieb befindliche Hochtemperaturspeicherbatterie 1 zu entsorgen, werden zunächst die peripheren Anschlüsse 6 und 7 entfernt. Dies kann manuell durchgeführt werden. Die Leitungen 6 und 7, die sich noch in gutem Zustand befinden, werden für die Herstellung von neuen Batterien verwendet. Die übrigen Leitungen 6 und 7 werden der Wiedergewinnung von Material zugeführt. Das Außengehäuse 2A wird durch gezieltes Öffnen der boden- und/oder deckelseitigen Schweißnähte abgetrennt. Das Metall des Gehäuses 2 wird der Wiederverwertung zugeführt. Die zwischen dem Außengehäuse 2A und dem Innengehäuse 2I befindlichen Wärmedämmstoffe 2R werden vom Hersteller zurückgenommen und gegebenenfalls aufgearbeitet, soweit das Material dies zuläßt, so daß es erneut als Wärmedämmstoff für Hochtemperaturspeicherbatterien genutzt werden kann. Anschließend wird das Innengehäuse 2I entfernt. Hierfür wird zunächst der Deckel 2D und dann das Innengehäuse 2I entfernt. Beide werden der Wiedergewinnung von Material zugeführt. Jetzt sind die in einer Vergußmasse 5 eingebetteten Speicherzellen 4 sichtbar. Die Speicherzellen 4 werden kopfseitig geöffnet, was beispielsweise mit Hilfe einer gesteuerten Mehrfachbohrstation erfolgen kann. Die Bohrungen werden so durchgeführt, daß die Kartuschen (hier nicht dargestellt) der Speicherzellen 4 zugänglich werden. Anschließend wird das in den Kartuschen befindliche Natrium in einem direkt angekoppelten Schutzgasofen aufgeschmolzen und aus den Kartuschen entfernt. Das Natrium kann zur Füllung neuer Speicherzellen wieder verwendet werden. Die freigelegten Kühl- und Heizeinrichtungen 8 und 9 können bei gutem Zustand wieder verwendet werden. Anderenfalls werden sie einem Verfahren zur Materialwiedergewinnung zugeführt. Die Vergußmassse 5, in der die Speicherzellen 4 eingebettet sind, wird mechanisch entfernt. Sie wird, soweit es möglich ist, aufgearbeitet und wieder verwendet. Die zurückbleibende natriumfreie Zellmatrix wird nachfolgend zerkleinert. Hierzu wird eine gekapselte Vor- und Nachzerkleinerungsschneidmühle (hier nicht dargestellt) eingesetzt. Die in dem Shreddergut enthaltenen Aluminiumteile werden mittels Magnetabscheider und/oder Siebvorrichtungen aussortiert und dem Schmelzrecycling zugeführt. Ein Großteil des chromhaltigen Gehäusekorresionsschutzes wird dabei mit einlegiert. Das zurückbleibende Shreddergut enthält kathodenseitiges Natriumpolysulfid zum Teil vermengt mit elementarem Schwefel. Diese Stoffe sind extrahierbar. Sie werden in wässrige Lösungen für die Weiterverarbeitung in der chemischen Industrie oder durch oxidative Nachbehandlung zu Neutralsalzen umgesetzt. Laborversuche bei potentiellen Abnehmern der schwefelverarbeitenden Industrie zeigen, daß diese Lösungen und Salze prinzipiell bei der Herstellung von Schwefelfarbstoffen oder zur Weiterverarbeitung zu Rhodanidkristallisat verwendbar sind. Verbleibende Elektrolytkeramik mit anhaftendem Graphitfilz kann schadstoffrei deponiert werden, oder nach Abbrand des Graphitfilzes als Zuschlag zu Baustoffen genutzt werden. Weiterhin besteht die Möglichkeit, den Elektrodenschrott thermisch zu verwerten. Die Einschleusung des Elektrodenschrotts in Anlagen mit Wirbelschichtöfen, in denen Schwefelerze zur Gewinnung von Schwefelsäure abgeröstet werden, ist möglich.

Mit dem erfindungsgemäßen Verfahren ist eine Materialwiedergewinnung von bis zu 97,5% erreichbar. Nicht wiederverwertbar ist eine Restanteil Aluminium im aussortierten Schwefelektrodenschrott sowie Keramikteile, die am aussortierten Aluminium anhaften. Reste der Schwefelelektrode, die eventuell noch an den Aluminiumteilen anhaften, werden beim Umschmelzrecycling abgebaut und sind deshalb als wiederverwertbar einzustufen.

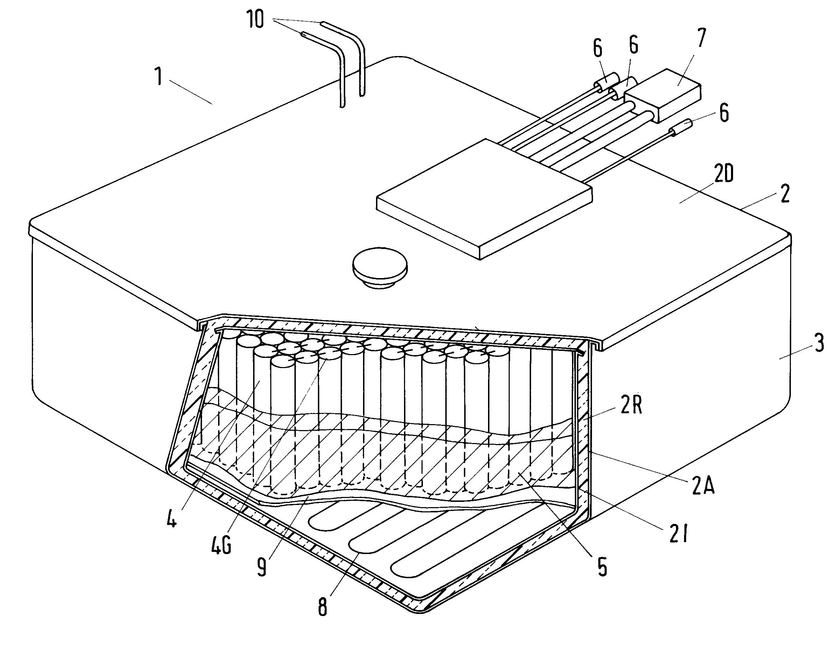

## Patentansprüche

1. Verfahren zur Entsorgung einer Hochtemperaturspeicherbatterie (1), die aus wiederaufladbaren Speicherzellen auf der Basis von Natrium und Schwefel aufgebaut ist, **dadurch gekennzeichnet**, daß die Hochtemperaturspeicherbatterie (1) schrittweise zerlegt und die abgetrennten Bauteile zur Herstellung neuer Hochtemperaturspeicherbatterien (1) oder der Wiedergewinnung von Material zugeführt werden.

2. Verfahren nach Anspruch 1, dadurch gekennzeichnet, daß die peripheren Anschlüsse (6, 7, 10) jeder Batterie (1) entfernt und der Herstellung neuer Batterien (1) oder der Wiedergewinnung von Material zugeführt werden.

3. Verfahren nach einem der Ansprüche 1 oder 2, dadurch gekennzeichnet, daß das Außengehäuse (2A) jeder Batterie(1) geöffnet und das Metall der Wiedergewinnung von Material zugeführt wird.

4. Verfahren nach einem der Ansprüche 1 bis 3, dadurch gekennzeichnet, daß das Isoliermaterial (2R) für die Herstellung neuer Batterien (1) aufgearbeitet oder deponiert wird.

5. Verfahren nach einem der Ansprüche 1 bis 4, dadurch gekennzeichnet, daß das Innengehäuse (2I) jeder Batterie (1) entfernt und die Metallteile der Wiedergewinnung von Material zugeführt werden.

6. Verfahren nach einem der Ansprüche 1 bis 5, dadurch gekennzeichnet, daß die Speicherzellen geöffnet und das in ihnen enthaltene Natrium in einem Schutzgasofen aufgeschmolzen, aus den Speicherzellen entfernt, gereinigt und für die Füllung neuer Speicherzellen (4) verwendet wird.

7. Verfahren nach einem der Ansprüche 1 bis 6, dadurch gekennzeichnet, daß die Heiz- und Kühlvorrichtungen (8,9) der Hochtemperaturspeicherbatterie (1) wieder verwendet oder der Wiedergewinnung von Material zugeführt werden.

8. Verfahren nach einem der Ansprüche 1 bis 7, dadurch gekennzeichnet, daß die Vergußmasse (5), in welcher die Speicherzellen eingebettet sind, mechanisch entfernt, aufbereitet und für die Herstellung neuer Hochtemperaturspeicherbatterien benutzt wird.

9. Verfahren nach einem der Ansprüche 1 bis 10, dadurch gekennzeichnet, daß die natriumfreie Zellmatrix zerkleinert, und die Aluminiumteile aussortiert und einem Umschmelzrecycling zugeführt werden, und daß der wesentliche Teil des chromhaltigen Gehäusekorrosionsschutzes einlegiert wird.

10. Verfahren nach einem der Ansprüche 1 bis 9, dadurch gekennzeichnet, daß das mit elementarem Schwefel vermischte Natriumpolysulfid extrahiert und in Form wässriger Lösungen für die Weiterverarbeitung in der chemischen Industrie gewonnen oder durch oxidative Nachbehandlung zu Neutralsalzen umgesetzt wird.

11. Verfahren nach einem der Ansprüche 1 bis 10, dadurch gekennzeichnet, daß die restliche Elektrolytkeramik mit anhaftendem Graphitfilz schadstoffarm deponiert oder nach dem Abbrand des Graphitfilzes als Zuschlag zu Baustoffen verwendet wird.

12. Verfahren nach einem der Ansprüche 1 bis 11, dadurch gekennzeichnet, daß die zerkleinerte und aussortierte Zellmatrix einem Wirbelschichtofen oder Drehrohrofen zur Gewinnung von Schwefelsäure zugeführt wird.
